# EUROPÄISCHE PATENTSCHRIFT

(11) **EP 1 386 331 B1**
(45) Veröffentlichungstag und Bekanntmachung des Hinweises auf die Patenterteilung: **27.07.2005**
(21) Anmeldenummer: 01944911.5
(22) Anmeldetag: 07.05.2001
(51) Int. Cl.: H01C 1/14

(54) **KERAMISCHES BAUELEMENT MIT KLIMASTABILER KONTAKTIERUNG**
CERAMIC COMPONENT COMPRISING AN ENVIRONMENTALLY STABLE CONTACT SYSTEM
COMPOSANT CERAMIQUE DOTE D'UN CONTACT STABLE AUX CONDITIONS CLIMATIQUES

(43) Veröffentlichungstag der Anmeldung: 04.02.2004
(73) Patentinhaber: EPCOS AG, 81541 München (DE)
(72) Erfinder: SCHRANK, Franz, A-8074 Raaba (AT); KLOIBER, Gerald, A-8073 Feldkirchen (AT)
(74) Vertreter: Epping Hermann & Fischer
(86) Internationale Anmeldenummer: PCT/DE2001/001719
(87) Internationale Veröffentlichungsnummer: WO 2002/091397

(56) Entgegenhaltungen:
- EP-A- 0 536 880
- EP-A- 0 580 323
- US-A- 5 168 256
- US-A- 5 175 527
- US-A- 5 252 943
- US-A- 5 841 183
- US-A- 5 896 081

## Beschreibung

Insbesondere miniaturisierte keramische Bauelemente zeigen unter dem Einfluß von Feuchtigkeit und/oder Wasser eine zunehmende Drift ihrer elektrischen Kenngrößen, die bei weiterer Einwirkung von Feuchtigkeit bis hin zum Totalausfall des Bauelements führt. Untersuchungen haben ergeben, daß diese Instabilität gegen bestimmte Klimata auf eine Elektromigration zurückzuführen ist. Durch die beim Betrieb am Bauelement bzw. an den Elektroden des Bauelements anliegende Spannung besteht zwischen unterschiedlichen elektrischen Polen des keramisches Bauelements eine Potentialdifferenz. Wenn nun die Einsatzbedingungen des Bauelements derart sind, daß sich ein geschlossener Feuchtigkeitsfilm zwischen den Elektroden ausbilden kann, startet ein Materialtransport von Elektrodenmaterial von der Anode zur Kathode. Insbesondere von dieser Elektromigration betroffen sind die Metalle Silber, Zinn und Blei, die üblicherweise in dem Lot enthalten sind, mit dem die elektrischen Anschlüsse auf den Elektroden befestigt sind. Die Migration führt dabei auf dem Weg von der Anode zur Kathode zur Ausbildung metallischer Ablagerungen, die durchgehende metallische Filme und Leiterbahnen auf der Keramik ausbilden können. Der Widerstand zwischen den Elektroden nimmt dadurch dramatisch ab, was letztendlich zum Kurzschluß und damit zum Totalausfall des keramischen Bauelements führt.

Bei keramischen Miniaturbauelementen, die in der Standardbauweise aus einem Keramikkörper mit Einbrandelektroden, gelöteten Anschlußdrähten und einer Kunststoffschutzumhüllung bestehen, ist eine gegen Elektromigration sichere Konstruktion bislang nicht bekannt. Eine verbesserte Beständigkeit gegen Elektromigration wird erzielt, wenn als Kunststoffumhüllung hydrophob modifizierte Epoxide verwendet werden, wie es in der älteren nicht vorveröffentlichten deutschen Patentanmeldung 198 51 869.2 beschrieben ist. Glasgekapselte Fühler, bei denen das Bauelement mit einem aus Glas bestehenden Überzug versehen wird, stellen eine weitere Verbesserung dar. Zur Herstellung der Verglasung sind jedoch hohe Prozeßtemperaturen erforderlich, so daß keine isolierten Anschlußdrähte verwendet werden können. Unter klimatisch anspruchsvollen Einsatzbedingungen werden auch hier Schädigungen durch elektrochemische Korrosion der Anschlußdrähte und/oder durch Migration über den Glaskörper beobachtet.

Aus der Druckschrift EP 0536880 A1 ist ein elektrischer Widerstand auf einem keramischen Träger bekannt, bei dem die elektrischen Außenanschlüsse fest mit am keramischen Träger ausgebildeten Metallstrukturen mit Hilfe einer elektrisch leitfähigen, Platin enthaltenden Verbindungsmasse fest verbunden sind. Die Metallstrukturen sowie die Verbindungsstelle von Außenanschlüssen sind mit einer Schutzumhüllung z. B. aus Glas abgedeckt.

Aufgabe der vorliegenden Erfindung ist es, ein keramisches Bauelement mit einer Kontaktierung anzugeben, die gegenüber der Einwirkung von Feuchte und/oder Wasser stabil ist.

Diese Aufgabe wird erfindungsgemäß mit einem Bauelement nach Anspruch 1 gelöst. Vorteilhafte Ausgestaltungen der Erfindung sowie ein Verfahren zur Herstellung des Bauelements sind weiteren Ansprüchen zu entnehmen.

Es wird ein keramisches Bauelement mit einem keramischen Körper und zumindest zwei auf diesem Körper aufgebrachten Elektroden angegeben, auf denen elektrische Anschlüsse zur Verbindung der Elektroden mit einer externen Schaltung und/oder einer Spannungsquelle befestigt sind. Die elektrischen Anschlüsse sind auf den Elektroden mit Hilfe einer gehärteten, elektrisch leitfähigen, ein Edelmetall ausgenommen Silber enthaltenden Verbindungsmasse befestigt. Zumindest die Elektroden sind mit einer Schutzumhüllung abgedeckt.

Bei den Elektroden und den Materialien für die elektrische Anschlüsse wird ganz auf die Verwendung von migrationsempfindlichen Metallen zu verzichtet. Die elektrischen Anschlüsse sind auf den Elektroden mit Hilfe einer Verbindungsmasse befestigt, die ein Edelmetall, Silber ausgenommen, enthält und sowohl die Haftung der Anschlüsse auf den Elektroden als auch eine elektrisch leitfähige Verbindung gewährleistet.

Als weiterer Schutz gegenüber Nässe sowie gegen mechanische und chemische Einwirkungen ist eine Schutzumhüllung zumindest über den Elektroden vorgesehen.

Mit der Erfindung wird in eindrucksvoller Weise gegenüber der genannten Standardausführung von miniaturisierten keramischen Bauelementen eine um ein Vielfaches verlängerte Ausfallzeit bestimmt, also eine erheblich längere Lebensdauer als bei bekannten Standardbauelementen. Des weiteren ist das Bauelement einfach herzustellen und verursacht in der Anwendung bei miniaturisierten Bauelementen keine wesentlich erhöhten Kosten.

Eine weiter verbesserte Klimabeständigkeit wird erhalten, wenn die Schutzumhüllung aus einem hydrophob eingestellten Kunststoff besteht. Als solcher kann insbesondere ein hydrophob eingestelltes Epoxidharz verwendet werden. Eine hydrophobe Einstellung von Epoxidharzen gelingt insbesondere durch Einbau unpolarer Gruppen, insbesondere von fluorierten Alkyl- und Cycloalkylgruppen.

Die elektrisch leitfähige Verbindungsmasse enthält ein Edelmetall, welches beispielsweise aus der Gruppe Gold, Palladium oder Platin ausgewählt ist. Die Verbindungsmasse kann dabei ein Leitkleber sein, also eine härtbare organische Zusammensetzung mit aus dem genannten Edelmetall bestehenden Füllstoffpartikeln. Ein solcher Leitkleber ist einfach aufzubringen und kann unter milden Bedingungen beispielsweise durch UV-Einstrahlung oder kurzzeitige Temperaturerhöhung auf gemäßigte Temperaturen von beispielsweise 150 Grad ausgehärtet werden.

In einer weiter verbesserten Ausgestaltung der Erfindung wird als Verbindungsmasse eine eines der genannten Edelmetalle enthaltende Einbrennpaste verwendet. Solche Einbrennpasten sind an sich bekannt und enthalten neben den die Leitfähigkeit herstellenden metallischen Partikeln noch keramische Anteile und einen organischen Binder zur Plastifizierung. Die keramischen Anteile dienen dazu, eine Sinterung der Paste zu ermöglichen, womit einerseits eine gute Haftung auf einer Keramik- oder Metalloberfläche und andererseits eine hohe mechanische Stabilität durch Zusammensintern der Paste gewährleistet ist.

Bei Verwendung sowohl eines Leitklebers als auch einer Einbrennpaste kann die Leitfähigkeit über Art und Anteil der Metallpartikel eingestellt werden.

Als elektrische Anschlüsse werden insbesondere Drähte vorgesehen, die zumindest auf der Bauelementseite, also an dem unmittelbar an das Bauelement angrenzenden Ende der elektrischen Anschlüsse mit einer elektrisch isolierenden Ummantelung versehen sind. Während bei der Ausführung der Erfindung mit dem Leitkleber das für die Ummantelung verwendete Material im Prinzip frei auswählbar ist, werden für mit Einbrennpaste aufgebrachte elektrische Anschlüsse vorzugsweise hochtemperaturfeste Kunststoffe als Ummantelung verwendet. Solche hochtemperaturbeständigen Kunststoffe sind beispielsweise aus Hochleistungspolymeren ausgewählt, insbesondere Polyaryletherketon, Polyimid oder Polytetrafluorethylen. Eine solche Ummantelung aus hochtemperaturbeständigen Kunststoffen ist gegen eine insbesondere kurzfristige Einwirkung hoher Temperaturen bis über 400 C unempfindlich. Dies ist bei der Erfindung von Vorteil, da die Einbrennpaste durch kurze Temperaturerhöhung auf eine Temperatur T3 zwischen 700 und 950 Grad Celsius innerhalb weniger Sekunden sinterverdichtet werden kann, ohne daß in dieser Zeit in unmittelbarer Nähe die Ummantelung beschädigt wird.

Mit Hilfe der erfindungsgemäß befestigten Anschlüsse, der Schutzumhüllung und den durch die Ummantelung isolierten elektrischen Anschlüssen sind erfindungsgemäße keramische Bauelemente auch unter starker klimatischer Belastung äußerst stabil und überstehen sogar einen Einsatz unter Wasser für mehrere Stunden.

Der Verzicht auf Metalle, die der Elektromigration unterliegen, betrifft natürlich auch die auf dem Bauelement aufsitzenden Elektroden. Dies können insbesondere Einbrandelektroden sein, für die ebenfalls eines der genannten Edelmetalle geeignet ist. Möglich ist es jedoch auch, die Elektroden aufzudampfen oder aufzusputtern.

Im Folgenden wird die Erfindung anhand von Ausführungsbeispielen und der dazu gehörigen vier Figuren näher erläutert.
- Figur 1a: zeigt einen mit Elektroden versehenen keramischen Bauelementkörper im schematischen Querschnitt
- Figur 1b: zeigt einen weiteren Bauelementkörper mit Elektroden in der Draufsicht
- Figur 2: zeigt einen erfindungsgemäßen elektrischen Anschluß im schematischen Querschnitt
- Figur 3: zeigt ein fertiges Bauelement im schematischen Querschnitt
- Figur 4: zeigt kumulative Ausfallraten erfindungsgemäßer Bauelemente ohne Schutzumhüllung in Wasser bei anliegender Spannung.

Als Ausführungsbeispiel wird die Herstellung eines Miniaturtemperatursensors auf der Basis einer NTC-Keramik beschrieben. Die dem besseren Verständnis der Erfindung dienenden Figuren sind daher nur schematisch und nicht maßstabsgerecht augeführt.

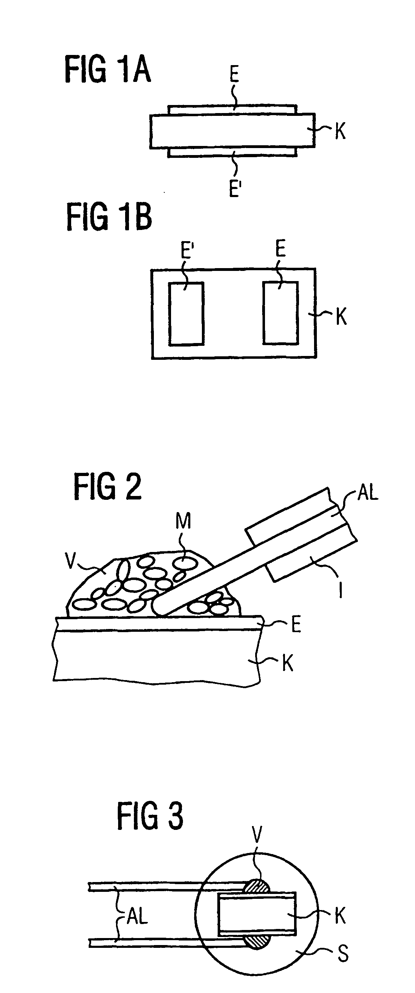

Figur 1 zeigt einen keramischen Körper K, der für einen Miniaturtemperatursensor beispielsweise aus einer NTC-Keramik (= Keramik mit negativen Temperaturkoeffizienten des Widerstands) besteht, beispielsweise aus Mn-Ni-Oxiden, Mn-Ni-Co-Oxiden oder Mn-Ni-Fe-Oxiden. Für den Miniaturtemperatursensor weist der Keramikkörper K beispielsweise Ausmaße von 1,50 x 1,25 x 0,35 mm³ auf. Auf beiden Hauptoberflächen ist er mit Elektroden E versehen, standardmäßig mit Einbrandelektroden. Erfindungsgemäß basieren die Einbrandelektroden auf einem Edelmetall, bei dem allerdings Silber wegen dessen Migrationsfähigkeit ausgenommen ist. Bevorzugt sind Einbrandelektroden auf der Basis einer Goldpaste, möglich sind jedoch auch solche auf der Basis von Platin oder Palladium. Figur 1b zeigt in schematischer Draufsicht eine weitere, bei den Temperatursensoren allerdings nicht verwirklichte Möglichkeit, bei einem keramisches Bauelement zwei Elektroden E auf der gleichen Oberfläche eines keramischen Körpers K aufzubringen.

Zur Verbindung des keramischen Bauelements mit einer Schaltungsumgebung oder einer Spannungsquelle werden die Elektroden mit elektrischen Anschlüssen verbunden. Als Anschluß dient ein beispielsweise drahtförmig ausgebildeter Anschlussleiter AL. Von Silber abgesehen ist die Materialauswahl für den Anschlussleiter ohne großen Einfluß auf die angestrebte Klimabeständigkeit des Bauelements. Zumindest am dem Bauelement zugewandten Ende des Anschlußleiters AL ist dieser mit einer Isolationszwecken dienenden Ummantelung I versehen. Diese besteht beispielsweise aus einem hochtemperaturfesten Thermoplasten.

Die Verbindung des Anschlußleiters mit den Elektroden E erfolgt beispielsweise mit einer glasflusshaltigen Goldpaste, die neben den die elektrische Leitfähigkeit gewährleistenden Goldpartikeln noch Glasbestandteile aufweist. Die Viskosität der Paste ist so eingestellt, daß sie einerseits noch "flüssig" verarbeitbar ist und andererseits bereits ausreichend pastös und klebrig ist, um eine gute Haftung sowohl auf der Elektrode als auch am Anschlussleiter zu gewährleisten. Vorzugsweise werden die Enden der Anschlussleiter AL mit der Paste beschichtet und anschließend mit der Elektrode E in Kontakt gebracht. Die Haftfähigkeit der Paste reicht aus, daß das keramische Bauelement zwischen zwei Anschlußleitern AL gehalten werden kann.

Zum Einbrennen der Paste wird eine dreistufige Temperaturbehandlung durchgeführt. In einer ersten Stufe wird bei einer ersten Temperatur T1 bis ca. 150 Grad Celsius das in der Paste enthaltene Lösungsmittel entfernt. In einer zweiten Stufe bei einer Temperatur T2, die zwischen 250 und 400 Grad Celsius gewählt wird, wird der organische Binder der Paste in einer Sauerstoff haltigen Umgebung ausgebrannt. Zur Verdichtung der verbleibenden anorganischen Anteile wird in einer dritten Stufe eine Sinterung bei einer Temperatur T3 zwischen 700 und 950 Grad Celsius durchgeführt. Bei diesem Schritt erreicht die Einbrandelektrode ihre endgültige Leitfähigkeit, außerdem wird durch die Sinterung eine gut haftende und mechanisch stabile Verbindung zwischen Anschlussleiter AL und der Elektrode E hergestellt. Der Sinterschritt wird dabei so durchgeführt, daß das Bauelement innerhalb kürzester Zeit auf die gewünschte Temperatur T3 gebracht wird und anschließend auch schnell wieder abgekühlt wird. Die Sinterverdichtung erfolgt innerhalb einer Zeitspanne ts, für die das Bauelement auf die Sintertemperatur T3 aufgeheizt wird. Im Ausführungsbeispiel ist es ausreichend, wenn ts ≤ 3 s beträgt. Der Sinterschritt ist so optimiert, daß die integrale Temperaturbelastung des Bauelements gering bleibt. So wird die durch die Temperaturbelastung mögliche Drift der elektrischen Kenngrößen minimiert. Zu diesem Zweck kann es besser sein, die Sinterung bei höherer Temperatur T3 aber gleichzeitig geringerer Zeitspanne ts durchzuführen. Dies ist auch für die Ummantelung I des Anschlußleiters AL von Vorteil, der auf diese Weise beim Sinterschritt unversehrt bleibt. Figur 2 zeigt ausschnittsweise das Bauelement nach diesem Schritt.

Nachdem auf diese Weise eine elektrische und mechanische Verbindung zwischen Bauelement bzw. Elektrode E und Anschlussleiter AL hergestellt ist, erfolgt in einem letzten Schritt das Herstellen einer Schutzumhüllung S. Dazu wird hier das gesamte Bauelement mit einer Schutzumhüllung aus einem Kunststoff, insbesondere aus einem hydrophob modifizierten Epoxid versehen. Dies kann beispielsweise dadurch erfolgen, dass das Bauelement kurz in flüssiges Epoxidharz eingetaucht Wird und der danach am Bauelement haftende Tropfen anschließend ausgehärtet wird. Figur 3 zeigt das mit einer Schutzumhüllung S versehene Bauelement im schematischen Querschnitt.

In einer weiteren Variante wird zur Befestigung des Anschlussleiters AL auf dem mit Elektroden E versehenen keramischen Körper K ein Metallpartikel enthaltender Kleber, ein sog. Metalleitkleber verwendet. Die Aufbringung des Klebers erfolgt vorzugsweise durch ein Druckverfahren auf die Enden des Anschlußleiters AL, die dafür vorzugsweise abgeflacht sind. Auch hier kann die Nassklebekraft des Leitklebers dazu verwendet werden, das Bauelement zwischen zwei Anschlussleitern AL zu halten. Zur Härtung des Klebers, welcher beispielsweise auf Epoxidbasis hergestellt ist, wird dieser einem Härtezyklus unterzogen. Dieser kann dabei ein- oder mehrstufig erfolgen, wobei Härtetemperaturen und Härtezeit vom Typ des eingesetzten Klebstoffs bzw. Epoxid abhängig sind. Als metallischer Füllstoff werden Metalle mit geringer Migrationsneigung, wie z.B. Gold, Platin, Palladium u.a. eigesetzt.

Im letzten Schritt wird auch bei dieser Variante das gesamte Bauelement mit einer Schutzumhüllung verkapselt.

Zum Testen der Klimabeständigkeit erfindungsgemäßer Bauelemente werden diese zusammen mit herkömmlichen Standardbauelementen (nicht erfindungsgemäße NTC-Sensoren mit Einbrandelektroden, gelöteten Anschlußdrähten und Schutzumhüllung aus Kunststoff) unterzogen. Unter den Bedingungen Spannungslagerung (3V Gleichstrom) in Wasser, nach einer Vorbehandlung der Sensoren (5 bar Druckwasser oder Temperaturschockbelastung, 100 Zyklen -5°/156°C) sind nach einer Testdauer von 56 Tagen sämtliche der getesteten Standardbauelemente ausgefallen. Bei erfindungsgemäßen Bauelementen mit mittels Leitkleber aufgebrachten Anschlussleitungen sind ca. 10% der Bauelemente ausgefallen. Bei erfindungsgemäßen Bauelementen mit aufgesinterten Anschlussleitungen (Variante 1) wird bis zu dieser Testdauer noch kein einziger Ausfall beobachtet.

In einem weiteren Test werden mit Spannung beaufschlagte erfindungsgemäße Bauelemente und Standardbauelemente ohne Schutzumhüllung jeweils in ein Volumen von 10 Mikroliter entsalztem Wasser eingetaucht. Als Betriebsspannung werden 3 Volt Gleichstrom angelegt. Von den Standardbauelementen wird bei 10 Prüflingen der letzte Ausfall ca. 4 Sekunden nach dem Einschalten der Spannung beobachtet. Bei erfindungsgemäßen nach Variante 2 hergestellten Bauelementen wird unter diesen Bedingungen nach einer Betriebsdauer von ca. 4,9 Stunden eine erste Veränderung der elektrischen Werte festgestellt, die aber noch keinen Ausfall des Bauelements bedeuten. Erfindungsgemäß nach Variante 1 hergestellte Bauelemente zeigen erst nach 47 Stunden Betriebsdauer unter Wasser erste Veränderungen, aber keinen Ausfall.

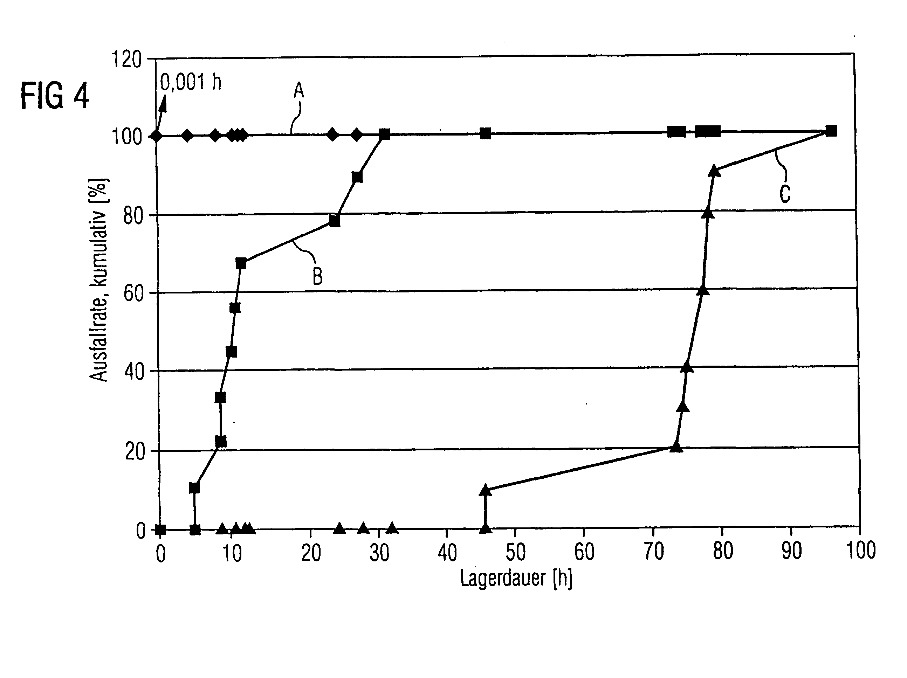

In Figur 4 sind die bei diesem Test bestimmtem kumulativen Ausfallraten graphisch dargestellt. Aufgetragen sind die Ausfallraten in Prozent gegen die Lagerdauer in Stunden. Die Kurve A für Standardbauelemente ist praktisch nicht als solche zu erkennen, da der steile Anstieg auf 100% Ausfallrate innerhalb weniger Sekunden praktisch eine Rechteckkurve darstellt. Kurve B zeigt die Ausfallrate nach Variante 2 hergestellter erfindungsgemäßer Bauelemente. Erste Ausfälle werden ab ca. 5 Stunden beobachtet, während 100% Ausfallrate erst nach über 30 Stunden erreicht werden. Kurve C zeigt die Ausfallrate nach Variante 1 hergestellter erfindungsgemäßer Bauelemente.

Aus dieser Darstellung läßt sich eindrucksvoll die Überlegenheit erfindungsgemäßer Bauelemente in Klimatests gegenüber Standardbauelementen erkennen. Dies ermöglicht es, erfindungsgemäße Bauelemente auch in klimatisch anspruchsvollen Umgebungen einzusetzen. Die genannten Miniaturtemperatursensoren können beispielsweise im Arbeitsbereich von -55 bis +155 Grad ohne Probleme eingesetzt werden. Nach Variante 1 hergestellte Sensoren überstehen beispielsweise 10.000 Zyklen, bei denen die Bauelemente von einer unteren Prüftemperatur von -55 Grad innerhalb von 10 Sekunden auf eine obere Prüftemperatur von 155 Grad Celsius gebracht werden, wobei die Verweilzeit bei beiden Prüftemperaturen jeweils 10 Minuten beträgt. Nach diesen Temperaturzyklen wird die Drift elektrischer Kenngrößen bestimmt, wobei sich für den Wert R₂₅ eine Drift von nur 0,12% ± 0,37% (Mittelwert ± Σ, 80 Prüflinge) festgestellt.

Obwohl die Erfindung in den Ausführungsbeispielen nur anhand von Temperatursensoren dargestellt wurde, ist sie prinzipiell auf praktisch alle keramischen Bauelemente übertragbar, insbesondere aber auf keramische Miniaturbauelemente, die allgemein in Klimatests eine besonders hohe Ausfallrate zeigen.

## Patentansprüche

1. Keramisches Bauelement
mit einem keramischen Körper (K),
mit zumindest zwei auf dem Körper aufgebrachten Elektroden (E),
mit elektrischen Anschlüssen (AL) zur Verbindung der Elektroden mit einer externen Schaltung und/oder einer Spannungsquelle,
bei dem die elektrischen Anschlüsse auf den Elektroden (E) mit Hilfe einer gehärteten, elektrisch leitfähigen, ein Edelmetall (M) ausgenommen Silber enthaltenden Verbindungsmasse (V) befestigt sind,
bei dem zumindest die Elektroden mit einer Schutzumhüllung (S) abgedeckt sind.

2. Bauelement nach Anspruch 1,
bei dem die Schutzumhüllung (S) ein hydrophob eingestellter Kunststoff ist.

3. Bauelement nach Anspruch 2,
bei dem der Kunststoff ein Epoxidharz ist.

4. Bauelement nach einem der Ansprüche 1-3,
bei dem die Verbindungsmasse (V) eine keramische Anteile umfassende Einbrennpaste ist.

5. Bauelement nach einem der Ansprüche 1-4,
bei dem die elektrischen Anschlüsse (AL) zumindest auf der Bauelement-Seite mit einer hochtemperaturbeständigen Ummantelung (I) versehen sind.

6. Bauelement nach Anspruch 5,
bei dem die Ummantelung (I) ausgewählt ist aus Polytetrafluorethylen, Polyimid, Polyaryletherketon oder anderen Hochleistungspolymeren.

7. Bauelement nach einem der Ansprüche 1-3,
bei dem die Verbindungsmasse (V) ein Leitkleber ist.

8. Bauelement nach einem der Ansprüche 1-7,
bei dem das Edelmetall (M) ausgewählt ist aus Au, Pd und Pt.

9. Bauelement nach einem der Ansprüche 1-8,
bei dem die Elektroden (E) als Goldeinbrandelektroden ausgebildet sind.

10. Verfahren zur Herstellung eines keramischen Bauelements nach Anspruch 1, mit den Schritten:
Aufbringen der ein Edelmetall umfassenden Elektroden (E) auf dem Bauelement (K)
Ankleben der elektrischen Anschlüsse (AL) auf den Elektroden mit Hilfe der Verbindungsmasse (V)
Aushärten der Verbindungsmasse
Aufbringen einer Kunststoffumhüllung (S) zumindest über den Elektroden (E).

11. Verfahren nach Anspruch 10,
bei dem die Verbindungsmasse (V) eine keramische Anteile enthaltende Einbrennpaste ist, bei dem das Aushärten in mehreren Stufen erfolgt, wobei zunächst bei erhöhter Temperatur T1 Lösungsmittel aus der Einbrennpaste entfernt wird, wobei anschließend bei einer Temperatur T2 der organische Anteil der Einbrennpaste ausgebrannt wird, und wobei anschließend für eine wenige Sekunden dauernde Zeitspanne t1 auf eine Temperatur T3 aufgeheizt wird, um eine vollstädige Sinterung der keramischen Anteile zu bewirken, wobei T1 < T2 < T3.

12. Verfahren nach Anspruch 11,
bei dem T1 ≤ 150°C, 250°≤ T2 ≤ 400°C, 700°≤ T3 ≤ 950°C und t1°≤ 3s.

## Claims

1. Ceramic component
having a ceramic body (K),
having at least two electrodes (E) applied to the body,
having electrical terminals (AL) for connecting the electrodes to an external circuit and/or a voltage source,
in which the electrical terminals are secured to the electrodes (E) with the aid with a hardened, electrically conductive connecting compound (V) containing precious metal (M) with the exception of silver,
in which at least the electrodes are covered with a protective sheath (S).

2. Component according to Claim 1, in which the protective sheath (S) is a hydrophobized plastic.

3. Component according to Claim 2, in which the plastic is an epoxy resin.

4. Component according to one of Claims 1-3, in which the connecting compound (V) is a stoving paste comprising ceramic fractions.

5. Component according to one of Claims 1-4, in which the electrical terminals (AL), at least on the component side, are provided with a covering (I) which is able to withstand high temperatures.

6. Component according to Claim 5, in which the covering (I) is selected from polytetrafluoroethylene, polyimide, polyaryl ether ketone or other high-performance polymers.

7. Component according to one of Claims 1-3, in which the connecting compound (V) is a conductive adhesive.

8. Component according to one of Claims 1-7, in which the precious metal (M) is selected from Au, Pd and Pt.

9. Component according to one of Claims 1-8, in which the electrodes (E) are designed as gold burn-in electrodes.

10. Process for producing a ceramic component according to Claim 1, comprising the steps of:
applying the electrodes (E), which comprise a precious metal, to the component (K),
adhesively bonding the electrical terminals (AL) to the electrodes with the aid of the connecting compound (V),
hardening the connecting compound,
applying a plastic sheath (S) at least over the electrodes (E).

11. Process according to Claim 10, in which the connecting compound (V) is a stoving paste containing ceramic fractions, in which the hardening is carried out in a plurality of stages, wherein first of all, at elevated temperature T1, solvent is removed from the stoving paste, then at a temperature T2 the organic fraction of the stoving paste is burnt out, and then heating is carried out at a temperature T3 for a period of time t1 which lasts a few seconds, in order to fully sinter the ceramic fractions, with T1 < T2 < T3.

12. Process according to Claim 11, in which T1 ≤ 150°C, 250°C ≤ T2 ≤ 400°C, 700°≤ T3 ≤ 950°C and t1 ≤ 3s.

## Revendications

1. Composant céramique
comprenant un corps (K) en céramique,
ayant au moins deux électrodes (E) déposées sur le corps,
ayant des bornes (AL) électriques de liaison des électrodes à un circuit extérieur et/ou à une source de tension,
dans lequel les bornes électriques sont fixées sur les électrodes (E) à l'aide d'une composition (V) de liaison durcie, conductrice d'électricité et contenant un métal (M) précieux à l'exception de l'argent,
dans lequel au moins les électrodes sont recouvertes d'un enrobage (S) de protection.

2. Composant suivant la revendication 1, dans lequel l'enrobage (S) de protection est une matière plastique réglée de manière hydrophobe.

3. Composant suivant la revendication 2, dans lequel la matière plastique est une résine époxyde.

4. Composant suivant l'une des revendications 1 à 3, dans lequel la composition (V) de liaison est une pâte de cuisson comprenant une proportion de céramique.

5. Composant suivant l'une des revendications 1 à 4, dans lequel les bornes (AL) électriques sont munies au moins du côté du composant d'une gaine (I) résistante aux hautes températures.

6. Composant suivant la revendication 5, dans lequel la gaine (I) est en polytétrafluoréthylène, en polyimide, en polyaryléthercétone ou en autres polymères de grande puissance.

7. Composant suivant l'une des revendications 1 à 3, dans lequel la composition (B) de liaison est une colle conductrice.

8. Composant suivant l'une des revendications 1 à 7, dans lequel le métal (M) précieux est choisi parmi Au, Pd et Pt.

9. Composant suivant l'une des revendications 1 à 8, dans lequel les électrodes (E) sont constituées sous la forme d'électrodes cuites en or.

10. Procédé de fabrication d'un composant céramique suivant la revendication 1 comprenant les stades :
de dépôt des électrodes (E) comprenant un métal précieux sur le composant (K),
de collage des bornes (AL) électriques sur les électrodes à l'aide de la composition (V) de liaison,
de durcissement de la composition de liaison,
de dépôt d'un enrobage (S) en matière plastique, au moins sur les électrodes (E).

11. Procédé suivant la revendication 10, dans lequel la composition (V) de liaison est une pâte de cuisson contenant des proportions de céramique dans lequel le durcissement s'effectue en plusieurs stades en éliminant d'abord à haute température (T1) du solvant de la pâte de cuisson, en éliminant ensuite par combustion à une température (T2) la proportion organique de la pâte de cuisson, et en portant ensuite à une température (T3) pendant un laps de temps (t1) durant quelques secondes pour provoquer un frittage complet des proportions céramiques avec T1 < T2 < T3.

12. Procédé suivant la revendication 11, dans lequel T1 ≤ 150° C, 250° C ≤ T2 ≤ 400°C, 700° C ≤ T3 ≤ 950°C et t1 ≤ 3s.
